# EUROPÄISCHE PATENTSCHRIFT

(11) **EP 1 396 306 B1**
(45) Veröffentlichungstag und Bekanntmachung des Hinweises auf die Patenterteilung: **08.06.2005**
(21) Anmeldenummer: 02400041.6
(22) Anmeldetag: 09.09.2002
(51) Int. Cl.: B23Q 1/00, B23Q 3/18, B23B 31/107, B23Q 11/00

(54) **Festspanneinrichtung zum Festspannen zweier Teile aneinander**
Clamping fixture for clamping two parts together
Dispositif de serrage pour serrer deux pièces l'une à l'autre

(43) Veröffentlichungstag der Anmeldung: 10.03.2004
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Kohler, Rainer, 78595 Hausen o.V. (DE)
(74) Vertreter: Vetter, Hans, Dipl.-Phys. Dr.

(56) Entgegenhaltungen:
- EP-A- 0 794 035
- DE-A- 4 341 046
- DE-A- 19 841 928
- DE-A- 19 917 146
- DE-U- 20 102 698

## Beschreibung

Die Erfindung betrifft eine Festspanneinrichtung zum Festspannen zweier Teile aneinander, insbesondere zum Fixieren einer Werkstückpalette auf einem Werkstücktisch, mit einem am ersten Teil befestigbaren Auflageteil, das ein vorspringendes Formelement besitzt, einem am zweiten Teil befestigbaren Gegenstück, das eine Ausnehmung zur Aufnahme des Formelements aufweist, und mit einem im vorspringenden Formelement verschiebbaren Schiebeelement, das wenigstens eine umfangsseitige Ausnehmung besitzt, in die wenigstens ein in einer Durchgangsbohrung des Formelements bewegbares Spannelement im nicht gespannten Zustand eingreift, wobei durch Verschiebung des Schiebeelements das Spannelement nach außen in die Spannstellung gedrückt wird, in der es in der Ausnehmung des Gegenstücks dieses hintergreift.

Bei einer aus der DE 19917146 A1 bekannten Festspanneinrichtung dieser Gattung sind die Spannelemente als Kugeln ausgebildet. Diese müssen zum einen in aufwendiger Weise gegen ein Herausfallen im Kugelkäfig gesichert bzw. verstemmt werden, und zum anderen können sie nicht abgedichtet werden, sodass Kühlschmierstoff und Bearbeitungsrückstände in das Spannsystem eindringen können. Weiterhin ist die Berührungsfläche zwischen Auflageteil und Gegenstück sehr groß, sodass auch hier die Gefahr der Ablagerung von Verunreinigungen extrem ist. Ein kontrolliertes Abheben und Aufsetzen ist nicht vorgesehen, sodass beim Aufsetzen des oberen Teils die Berührungsfläche beschädigt werden kann. Eine Vorzentrierung ist nur in sehr ungenügender Weise realisiert.

Auch bei aus der DE 19841928 A1, der DE 19834040 C2 oder der DE 4135418 A1 bekannten Festspanneinrichtungen sind Kugeln als Spannelemente mit den bereits beschriebenen Nachteilen vorgesehen. Durch das von oben her eintauchende Schiebeelement sind Verunreinigungen durch schwerkraftbedingte Späneablagerungen und Kühlschmierstoffe nur schwer zu verhindern und wieder zu entfernen. Verunreinigungen können sich sehr leicht festsetzen und verhindern ein exaktes und planes Aufsetzen des oberen Teils auf das untere Teil. Durch die erforderlichen Federspeicher wird die gesamte Anordnung aufwendig und kostenintensiv sowie anfällig gegen Störungen und Alterung. Es sind aufwendige Abdichtmaßnahmen erforderlich. Da die Kugeln nicht abgedichtet werden können, müssen alle umliegenden Bauteile in aufwendiger Weise abgedichtet werden. Auch eine Vorzentrierung ist nur in sehr ungenügender Weise vorhanden.

Schließlich ist aus der DE 10031103 A1 eine Festspanneinrichtung bekannt, die als Spannmechanismus eine aufwendige Spannzange aufweist. Die Abdichtung der Spannzange gegen Verschmutzungen ist sehr aufwendig und dennoch unbefriedigend.

Eine Aufgabe der vorliegenden Erfindung besteht darin, eine Festspanneinrichtung der eingangs genannten Gattung zu schaffen, bei der auf einfache und kostengünstige Weise ein Eindringen von Schmierstoffen und Verunreinigungen und eine Ablagerung derselben verhindert werden kann.

Diese Aufgabe wird einmal dadurch gelöst, dass das Spannelement einen mittleren Führungsbereich zur Linearführung in der Durchgangsbohrung besitzt, der mit einer Ringnut zur Aufnahme eines Dichtungsrings versehen ist, und dass zu beiden Seiten des Führungsbereichs halbkugelartige Endbereiche angeformt sind.

Durch die erfindungsgemäße Formgestaltung des Spannelements kann dieses mit einem Dichtungsring versehen werden, so dass ein Eindringen von Schmierstoffen und sonstigen Verunreinigungen wirksam verhindert werden kann. Der Dichtungsring verhindert gleichzeitig ein Herausfallen des Spannelements aus seiner Führungsbohrung, sodass zusätzliche Sicherungen gegen Herausfallen, beispielsweise Verstemmen, nicht erforderlich sind. Die Formgestaltung des Spannelements gewährleistet eine Linearführung, sodass die axiale Spannkraft des Schiebeelements in eine axiale und eine radiale Kraftkomponente zerlegt werden kann. Die radiale Kraftkomponente übernimmt dabei die Lageposition (Zentrieren und Spannen) in der horizontalen Ebene. Demgegenüber kann durch die bekannten Kugeln als Spannelemente nur gespannt, nicht dagegen positioniert bzw. zentriert werden. Durch die beiden halbkugelartigen Endbereiche werden die Spannelemente mittels zweier beabstandeter Ringkanten in der Durchgangsbohrung geführt, wodurch ein Verkanten verhindert wird.

Durch die in den Unteransprüchen aufgeführten Maßnahmen sind vorteilhafte Weiterbildungen und Verbesserungen der im Anspruch 1 angegebenen Festspanneinrichtung möglich.

Einer der Endbereiche des Spannelements, insbesondere der radial nach außen weisende Endbereich, besitzt eine Abplattung, die vorzugsweise im nicht gespannten Zustand im Wesentlichen mit der Außenfläche des Formelements fluchtet. Hierdurch kann die Gesamtlänge verringert und eine gute Linearführung gewährleistet werden.

Bevorzugt sind wenigstens drei Spannelemente über den Umfang verteilt angeordnet, wobei auch fünf oder sieben Spannelemente gute Lösungen darstellen, um das gewünschte Zentrieren und Spannen zu realisieren.

In vorteilhafter Weise ist das Schiebeelement mit einem doppelseitig beaufschlagbaren Kolben fest oder einstückig verbunden, der in einer Zylinderbohrung im Auflageteil verschiebbar ist. Dies führt in Verbindung mit den in den Durchgangsbohrungen bewegbaren Spannelementen zu einer einfachen und kompakten Einrichtung mit einer geringen Zahl von Bauelementen, sodass man mit einer einfachen und kostengünstigen und dennoch wirksamen Abdichtung gegen das Eindringen von Schmierstoffen und Verunreinigungen auskommt. Durch den doppelseitig druckbeaufschlagbaren Kolben kann zudem auf die bekannten mechanischen Federspeicher verzichtet werden.

Das Schiebeelement ragt im nicht gespannten ausgefahrenen Grundzustand aus dem Formelement heraus, wobei die Stirnfläche des herausragenden Bereichs als Auflagefläche für eine Gegenfläche in der Ausnehmung des Gegenstücks ausgebildet ist. Hierdurch kann das Gegenstück in vorteilhafter Weise zunächst durch das Formelement vorzentriert auf das Schiebeelement aufgelegt und dann kontrolliert mit Hilfe des Kolbens auf die Zentrierungsflächen bzw. Referenzflächen abgelegt werden.

Die wenigstens eine umfangsseitige Ausnehmung des Schiebeelements besitzt eine schräge Betätigungsfläche zum Hinausdrücken des wenigstens einen Spannelements in die Spannstellung während der Absenkbewegung des mit dem Gegenstück beladenen Schiebeelements. Hierdurch ist ein sehr schnelles und präzises Zentrieren und Spannen möglich.

Das zusammen mit der glockenartigen Ausnehmung im Gegenstück eine Vorzentrierungsanordnung bildende kegelstumpfartige Formelement besitzt vorzugsweise an seinem Fußbereich oder im daran benachbarten Bereich des Auflageteils eine zentrierende, ringförmige Auflagefläche für eine entsprechende Gegenfläche des Gegenstücks. Diese relativ kleine ringförmige Auflagefläche ist gegenüber Verschmutzungen unempfindlicher als eine größere Planauflage gemäß dem Stand der Technik.

Eine weitere wirksame Maßnahme zur Verhinderung von Verschmutzungen und Ablagerungen besteht darin, dass das Formelement und/oder das Schiebeelement wenigstens eine fluidische Druckleitung enthält, deren wenigstens eine Ausblasmündung gegen die Ausnehmung des Gegenstücks gerichtet ist. Durch Umlenkung des Druckstrahls in der Ausnehmung werden Verschmutzungen, Bearbeitungsrückstände und Schmierstoffe aus der Ausnehmung, vom Formelement und von den zentrierenden Auflageflächen bzw. Referenzflächen entfernt, sodass ein präzises Aufsetzen sichergestellt ist. Durch regelmäßige Betätigung dieses Druckstrahls beim Aufsetzen werden auch Ablagerungen wirksam verhindert. Vorzugsweise bei einer glockenartigen Ausbildung der Ausnehmung des Gegenstücks kann dieser Druckstrahl und dessen Umlenkung so optimiert werden, dass eine optimale Reinigung sichergestellt ist.

Weiterhin hat es sich als vorteilhaft herausgestellt, eine Volumenstrom-Messeinrichtung zur Positionsüberprüfung der Druckleitung zuzuordnen, die insbesondere vor Erreichen der Spannstellung und/oder in der Spannstellung aktivierbar ist. Der Volumenstrom stellt ein Maß für die Annäherung der beiden Teile aneinander dar, sodass der korrekte Sitz in der Spannstellung auf einfache Weise überprüft werden kann.

Ein Ausführungsbeispiel der Erfindung ist in der Zeichnung dargestellt und in der nachfolgenden Beschreibung näher erläutert. Es zeigen:
- Figur 1: eine Festspanneinrichtung in der Vertikalschnittdarstellung als Ausführungsbeispiel der Erfindung im Zustand der Annäherung des oberen Gegenstücks an das untere Auflageteil,
- Figur 2: dieselbe Anordnung beim Aufsetzen des Gegenstücks auf das aus dem Formelement ausgefahrene Schiebeelement und
- Figur 3: dieselbe Anordnung im zentrierten Spannzustand.

Die in den drei Figuren in verschiedenen Arbeitsstellungen dargestellte Festspanneinrichtung besteht im Wesentlichen aus einem unteren Auflageteil 10 und einem oberen Gegenstück 11, die miteinander verspannt werden können. Das untere Auflageteil 10 kann mit einem ersten, nicht dargestellten Teil und das Gegenstück 11 mit einem zweiten, nicht dargestellten Teil verschraubt werden, sodass diese beiden Teile mittels der Festspanneinrichtung miteinander verspannt bzw. aneinander fixiert werden können. Hierzu dienen mehrere derartige Festspanneinrichtungen, zum Beispiel drei oder vier. Hierdurch können beispielsweise Werkstücke als zweite Teile an einem Werkstücktisch als erstes Teil in einer vorgesehenen Position fixiert werden. Die Werkstücke können auch auf einer Werkstückpalette fixiert sein, sodass die Gegenstücke 11 an dieser Werkstückpalette fixiert sind, um sie am Werkstücktisch zu fixieren. Eine weitere Alternative besteht'darin, dass am Werkstückstisch eine mit Auflageteilen 10 versehene Spannplatte fixiert ist, sodass die Werkstückpalette bzw. die Werkstücke mittels der Festspanneinrichtungen an dieser Spannplatte fixiert werden können. Generell gesagt können derartige Festspanneinrichtungen überall dort eingesetzt werden, wo zwei Teile in einer festgelegten exakten Position miteinander verspannt bzw. aneinander fixiert werden sollen.

Das untere Auflageteil 10 besteht aus einer Grundplatte 12, die Schraubenlöcher 13 (in der Schnittdarstellung ist nur ein Schraubenloch 13 sichtbar) zum Anschrauben beispielsweise an einen Werkstücktisch mittels nicht dargestellter Halteschrauben. Auf dieser Grundplatte 12 ist ein Einzugselement 14 in nicht näher dargestellter Weise fixiert, das ein nach oben vorspringendes kegelstumpfartiges Formelement 15 besitzt. Dieses Einzugselement 14 greift mit einem unteren rohrartigen Fortsatz 16 in eine entsprechende zylindrische Ausnehmung 17 der Grundplatte 12 ein.

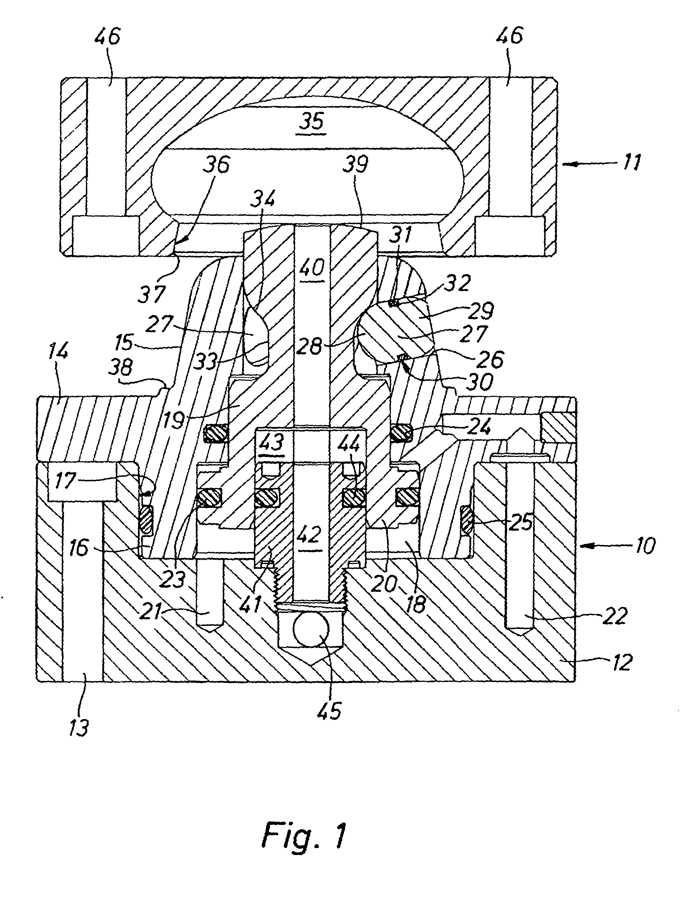

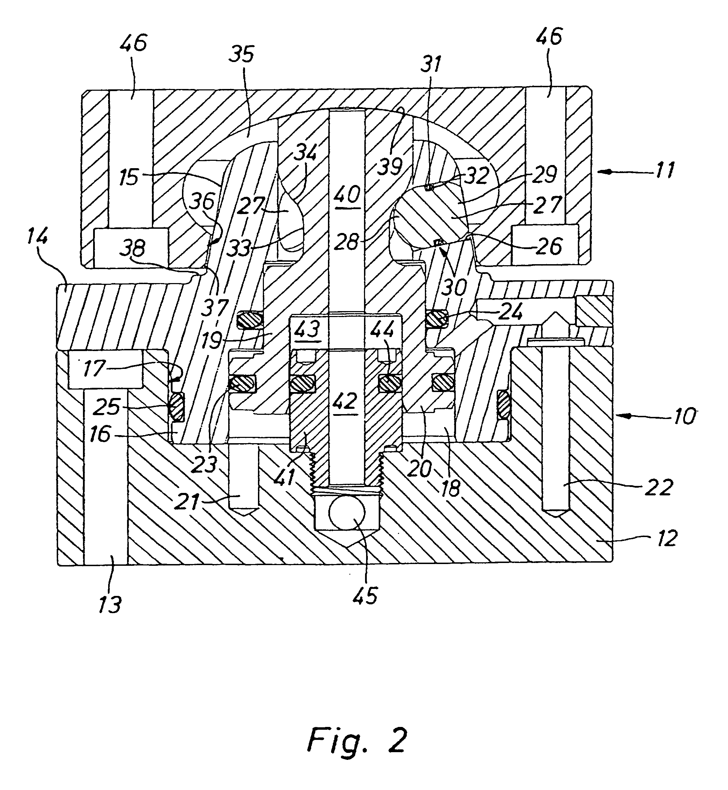

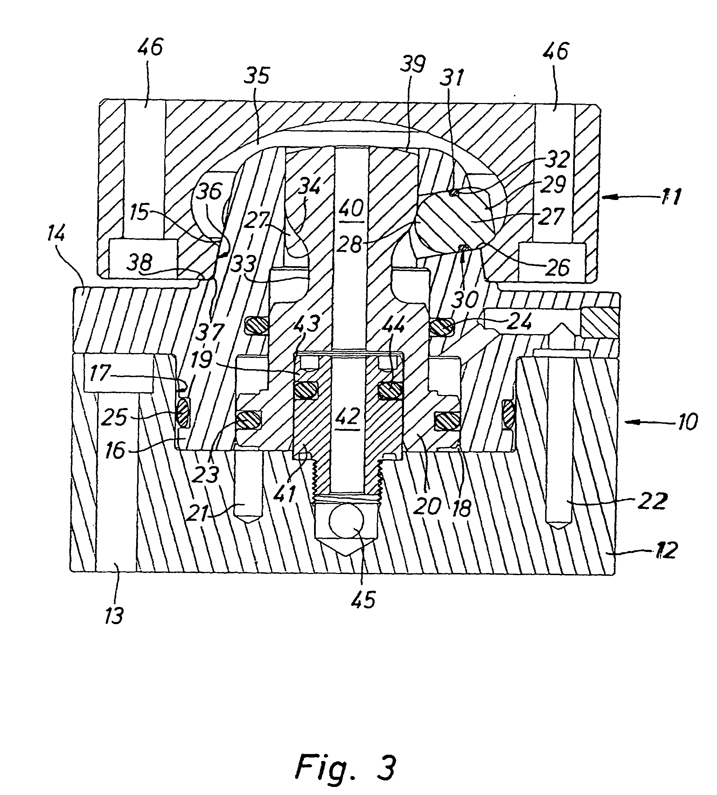

Das Einzugselement 14 ist mit einer konzentrischen dreistufigen Durchgangsbohrung 18 versehen, in der ein entsprechend geformtes dreistufiges Schiebeelement 19 verschiebbar geführt ist. Die unterste Stufe des Schiebeelements 19 mit größerem Durchmesser ist als doppelseitig druckbeaufschlagbarer Kolben 20 ausgebildet. Bei Druckbeaufschlagung eines ersten Fluidikanschlusses 21, der beispielsweise als Hydraulikanschluss ausgebildet ist, bewegt sich der Kolben 20 und damit das Schiebeelement 19 nach oben in die ausgefahrene Stellung, die in den Figuren 1 und 2 dargestellt ist. In dieser Stellung ragt der oberste Bereich des Schiebeelements 19 über das Formelement 15 hinaus. Bei Druckbeaufschlagung eines zweiten Fluidikanschlusses 22, der ebenfalls ein Hydraulikanschluss sein kann, bewegt sich der Kolben 20 und damit das Schiebeelement 19 in die untere Spannstellung, die in Figur 3 dargestellt ist.

Der Kolben 20 ist mit einem Kolben-Dichtungsring 23 versehen, wobei der mittlere Bereich des Schiebeelements 19 nochmals mittels eines in die Wandung des Einzugselements 14 eingelassenen Dichtungsrings 24 abgedichtet ist. Ein weiterer Dichtungsring 25 dient zur Abdichtung zwischen Einzugselement 14 und Grundplatte 12.

Die Wandung des vorspringenden Formelements 15 besitzt drei radiale Durchgangsbohrungen 26, von denen in den Figuren nur zwei erkennbar sind. Es kann sich auch um eine größere Zahl von Durchgangsbohrungen 26 handeln, beispielsweise fünf oder sieben Durchgangsbohrungen. In den geringfügig schräg nach oben verlaufenden Durchgangsbohrungen 26 sind Spannelemente 27 verschiebbar geführt. Diese Spannelemente besitzen zwei halbkugelartige Endbereiche 28, 29, die über einen mittleren Führungsbereich 30 zur Linearführung in der jeweiligen Durchgangsbohrung 26 miteinander verbunden sind. Dieser mittlere Führungsbereich 30 ist umfangsseitig mit einer Ringnut 31 zur Aufnahme eines Dichtungsrings 32 versehen. Der äußere Endbereich 29 ist abgeplattet, sodass die abgeplattete Stirnseite im nicht gespannten Zustand gemäß den Figuren 1 und 2 mit der Außenfläche des Formelements 15 im Wesentlichen fluchtet. Durch die beiden halbkugelartigen Endbereiche 28, 29, die unmittelbar oder nahezu unmittelbar an die Ringnut 31 angrenzen, ergeben sich zwei beabstandete Ringkanten zur Führung in den Durchgangsbohrungen 26, die ein Verkanten der Spannelemente 27 verhindern. Durch die Reibung des Dichtungsrings 32 wird ein Herausfallen der Spannelemente 27 verhindert.

Im nicht gespannten Zustand gemäß den Figuren 1 und 2 greifen die inneren Endbereiche 28 der Spannelemente 27 in eine umfangsseitige Ringausnehmung 33 des Schiebeelements 19 ein. Diese Ringausnehmung 33 besitzt eine Schrägfläche 34, die auch gekrümmt sein kann, und durch die die Spannelemente 27 beim Einfahren des Schiebeelements 19 in die untere Spannstellung nach außen in die Spannstellung gedrückt werden, die in Figur 3 dargestellt ist.

Das Gegenstück 11 besitzt eine glockenartige Ausnehmung 35 zur Aufnahme des Formelements 15. An ihrem Öffnungsrand ist die glockenartige Ausnehmung 35 verjüngt und besitzt dort eine sich nach außen erweiternde konusartige Vorzentrierfläche 36, die in Verbindung mit dem Formelement 15 zur Vorzentrierung dient. Diese konusartige Vorzentrierfläche 36 geht nach außen in eine sich nochmals erweiternde, zur eigentlichen Zentrierung dienende Referenzfläche 37 über, die zur Zentrierung in Verbindung mit einer Gegenreferenzfläche 38 am Fußpunkt des Formelements 15 dient, die ebenfalls als Ringfläche ausgebildet ist.

Zum Spannen wird zunächst das mit dem Gegenstück 11 versehene, nicht dargestellte obere Teil so auf das mit den Auflageteilen 10 versehene untere Teil aufgelegt, dass die Formelemente 15 in die Ausnehmung 35 eingreifen. Dies zeigen die Figuren 1 und 2. Das Schiebeelement 19 ist nach oben ausgefahren, wobei die obere Endfläche 39 des vorstehenden Teils des Schiebeelements 19 als Auflagefläche für die entsprechende Gegenfläche in der glockenartigen Ausnehmung 35 dient. In Figur 2 ist diese Auflageposition erreicht. Nun wird durch entsprechende Druckbeaufschlagung des zweiten Fluidikanschlusses 22 der Kolben 20 und damit das Schiebeelement 19 nach unten verschoben. Dadurch wird das obere, mit den Gegenstücken 11 versehene Teil abgesenkt, bis die Referenzflächen 37 auf den Gegenreferenzflächen 38 zu liegen kommen und die Zentrierung stattfindet. Bei der Abwärtsbewegung werden - wie bereits beschrieben - die Spannelemente 27 nach außen in die Spannstellung geschoben, wodurch die Zentrierung unterstützt wird und gleichzeitig das Festspannen erfolgt. Die Spannelemente 27 hintergreifen dabei die verjüngte Mündung der glockenartigen Ausnehmung 35.

Zum Lösen wird der erste Fluidikanschluss 21 mit Druck beaufschlagt, sodass der Kolben 20 und damit das Schiebeelement 19 wieder nach oben bewegt werden. Dies führt zu einem sanften Abheben der oberen Gegenstücke 11 von den unteren Auflageteilen 10, wobei gleichzeitig die Spannelemente 27 durch den verjüngten Randbereich der glockenartigen Ausnehmung 35 wieder radial nach innen verschoben werden.

Das Schiebeelement 19 besitzt einen zentralen Ausblaskanal 40, über den Druckluft durch die obere Mündung des Schiebeelements 19 austreten kann. Ein an der Grundplatte 12 konzentrisch zum Schiebeelement 19 fixiertes Kolbenteil 41 mit einem zentralen Druckkanal 42 greift dabei in eine entsprechende zylindrische Ausnehmung 43 im unteren Endbereich des Schiebeelements 19 ein, um die Druckzuführung in jeder Stellung des sich vertikal bewegenden Schiebeelements 19 zu gewährleisten. Eine Ringdichtung 44 am Kolbenteil 41 dient zur Abdichtung. Gespeist werden der zentrale Druckkanal 42 und der damit fluchtende Ausblaskanal 41 von einem Druckluftanschluss 45.

Beim Absenken des Gegenstücks 11 auf das Auflageteil 10 wird ein Druckluftstrahl durch den Ausblaskanal 40 geleitet, der durch die Gestaltung der glockenartigen Ausnehmung 35 umgelenkt wird und dabei die Ausnehmung 35, die obere Endfläche 39, das Formelement 15, die Referenzfläche 37 und die Gegenreferenzfläche 38 wirksam reinigt. Da beim Spannvorgang der Luftspalt kontinuierlich verengt wird, nimmt die Strömungsgeschwindigkeit extrem zu und bewirkt somit einen optimalen Reinigungseffekt vor allem an der Referenzfläche 37 und der Gegenreferenzfläche 38.

Über eine nicht dargestellte Volumenstrom-Messeinrichtung wird das Strömungsvolumen des Ausblasstrahls gemessen. Dieser ist ein Maß für den ordnungsgemäßen Passsitz. Je größer der Passungsspalt zwischen Referenzfläche 37 und Gegenreferenzfläche 38, desto mehr Luftvolumen strömt aus. Es wird dabei insbesondere im gespannten Zustand ein pneumatischer Druck an den Druckluftanschluss 45 angelegt und das Volumen des austretenden Luftstroms gemessen und mit einem Referenzwert verglichen. Liegen zu große Differenzen vor, also ein zu großer Spalt zwischen den aneinanderliegenden Flächen, so kann davon ausgegangen werden, dass aufgrund von Verschmutzungen keine ordnungsgemäße Auflage vorliegt. Durch diese Volumenstrommessung können Spaltunterschiede bis zu 0,01 mm sicher erkannt werden.

Im Ausführungsbeispiel dient eine Schraubbefestigung zur Befestigung des Gegenstücks 11 und des Auflageteils 10 an den entsprechenden aneinander zu fixierenden Teilen. Hierzu dienen die Schraubenlöcher 13 in der Grundplatte 12 des Auflageteils 10 und entsprechende Schraubenlöcher 46 im Gegenstück 11. Selbstverständlich sind auch andere bekannte Befestigungsarten möglich, beispielsweise Schweißverbindungen, Klebeverbindungen, Klemmverbindungen, Verriegelungen und Gewindebefestigungen.

Anstelle der Ringausnehmung 33 am Schiebeelement 19 können selbstverständlich auch einzelne Ausnehmungen vorgesehen sein, die jeweils einem Spannelement 27 zugeordnet sind.

## Patentansprüche

1. Festspanneinrichtung zum Festspannen zweier Teile aneinander, insbesondere zum Fixieren einer Werkstückpalette auf einem Werkstücktisch, mit einem am ersten Teil befestigbaren Auflageteil (10), das ein vorspringendes Formelement (15) besitzt, einem am zweiten Teil befestigbaren Gegenstück (11), das eine Ausnehmung (35) zur Aufnahme des Formelements (15) aufweist, und mit einem im vorspringenden Formelement (15) verschiebbaren Schiebeelement (19), das wenigstens eine umfangsseitige Ausnehmung (33) besitzt, in die wenigstens ein in einer Durchgangsbohrung (26) des Formelements (15) bewegbares Spannelement (27) im nicht gespannten Zustand eingreift, wobei durch Verschiebung des Schiebeelements (19) das Spannelement (27) nach außen in die Spannstellung gedrückt wird, in der es in der Ausnehmung (35) des Gegenstücks (11) dieses hintergreift, **dadurch gekennzeichnet, dass** das Spannelement (27) einen mittleren Führungsbereich (30) zur Linearführung in der Durchgangsbohrung (26) besitzt, der mit einer Ringnut (31) zur Aufnahme eines Dichtungsrings (32) versehen ist, und dass zu beiden Seiten des Führungsbereichs (30) halbkugelartige Endbereiche (28, 29) angeformt sind.

2. Festspanneinrichtung nach Anspruch 1, **dadurch gekennzeichnet, dass** einer der Endbereiche (29) eine Abplattung besitzt, die vorzugsweise im nicht gespannten Zustand im Wesentlichen mit der Außenfläche des Formelements (15) fluchtet.

3. Festspanneinrichtung nach Anspruch 1 oder 2, dadurch gekennzeichnen, dass wenigstens drei Spannelemente (27) über den Umfang verteilt angeordnet sind.

4. Festspanneinrichtung nach einem der vorhergehenden Ansprüche, **dadurch gekennzeichnet, dass** das Schiebeelement (19) mit einem doppelseitig druckbeaufschlagbaren Kolben (20) fest oder einstückig verbunden ist, der in einer Zylinderbohrung (18) im Auflageteil (10) verschiebbar ist.

5. Festspanneinrichtung nach Anspruch 4, **dadurch gekennzeichnet, dass** das Schiebeelement (19) im nicht gespannten, ausgefahrenen Grundzustand aus dem Formelement (15) herausragt und dass die Stirnfläche (39) des herausragenden Bereichs als Auflagefläche für eine Gegenfläche in der Ausnehmung (35) des Gegenstücks (11) ausgebildet ist.

6. Festspanneinrichtung nach Anspruch 5, **dadurch gekennzeichnet, dass** die wenigstens eine umfangsseitige Ausnehmung (33) des Schiebeelements (19) eine schräge Betätigungsfläche (34) zum Hinausdrücken des wenigstens einen Spannelements (27) in die Spannstellung während der Absenkbewegung des mit dem Gegenstück (11) beladenen Schiebeelements (19) besitzt.

7. Festspanneinrichtung nach einem der vorhergehenden Ansprüche, **dadurch gekennzeichnet, dass** das zusammen mit der glockenartigen Ausnehmung (35) im Gegenstück (11) eine Vorzentrierungsanordnung bildende kegelstumpfartige Formelement (15) vorzugsweise an seinem Fußbereich oder im daran benachbarten Bereich des Auflageteils (10) eine zentrierende, ringförmige Auflagefläche (38) für eine entsprechende Gegenfläche (37) des Gegenstücks (11) besitzt.

8. Festspanneinrichtung nach einem der vorhergehenden Ansprüche, **dadurch gekennzeichnet, dass** das Formelement (15) und/oder das Schiebeelement (19) wenigstens eine fluidische Druckleitung (40) enthält, deren wenigstens eine Ausblasmündung gegen die Ausnehmung (35) des Gegenstücks (11) gerichtet ist.

9. Festspanneinrichtung nach Anspruch 8, **dadurch gekennzeichnet, dass** die Ausnehmung (35) des Gegenstücks (11) eine glockenartige, den Luftstrom umlenkende und auch eine Reinigung des Formelements bewirkende Innenkontur besitzt.

10. Festspanneinrichtung nach Anspruch 8 oder 9, **dadurch gekennzeichnet, dass** eine Volumenstrom-Messeinrichtung zur Positionsüberprüfung der Druckleitung (40) zugeordnet ist, die insbesondere vor Erreichen der Spannstellung und/oder in der Spannstellung aktivierbar ist.

## Claims

1. Clamping device for clamping two parts together, in particular for setting in place a workpiece pallet on a workpiece table, having a supporting piece (10) which can be fastened to the first part and which has a protruding shaped element (15), an opposing piece (11) which can be fastened to the second part, which has a cut-away section (35) for receiving the shaped element (15) and having an adjustable sliding element (19) which can be adjusted in the protruding shaped element (15) which has at least one cut-away section (33) on the perimeter into which engages at least one clamping element (27) which is movable in a through-bore (26) of the shaped element (15) in a non-clamped state, whereby, by adjustment of the sliding element (19), the clamping element (27) is pressed outwards into the clamping position, in which it engages from behind into the cut-away section (35) of the opposing piece (11) **characterized in that** the clamping element (27) has a medium guidance zone (30) for linear guidance in the through-bore (26), which is fitted with a circular groove (31) into which fits a sealing ring (32) and that, on both sides of the guidance zone (30) hemispherical ends (28, 29) are pre-formed.

2. Clamping device according to claim 1, **characterized in that** one of the ends (29) has a flat part which preferably essentially is aligned, in a non-clamped state, with the outer surface of the shaped element (15).

3. Clamping device according to claim 1 or 2, **characterized in that** at least three clamping elements (27) are distributed above the perimeter.

4. Clamping device according to one of the preceding claims, **characterized in that** the sliding element (19) is connected firmly or in one piece to a double-sided pressure-operated piston (20) which is adjustable inside a cylinder bore (18) in the supporting piece (10).

5. Clamping device according to claim 4, **characterized in that** the sliding element (19) in a non-clamped extended basic state, protrudes from the shaped element (15) and that the upper surface (39) of the protruding section is designed as a supporting surface for an opposing surface in the cut-away section (35) of the opposing piece (11).

6. Clamping device according to claim 5, **characterized in that** at least one cut-away section (33) of the sliding element (19) on the perimeter side has a sloping operational surface (34) for the pushing outwards of at least one clamping element (27) into the clamping position, during the lowering movement of the sliding element (19) which has engaged with the opposing piece (11).

7. Clamping device according to one of the preceding claims **characterized in that** the shaped element (15), in the shape of a truncated cone, forming a centring arrangement together with the bell-shaped cut-away section (35) in the opposing piece (11) preferably has a centring circular supporting surface (38) in the region of its base or in the nearby region of the support piece (10) for a corresponding opposing surface (37) of the opposing piece (11).

8. Clamping device according to one of the preceding claims **characterized in that** the shaped element (15) and/or the sliding element (19) contains at least one fluid pressure-duct (40) at least one release outlet of which is oriented towards the cut-away section (35) of the opposing piece (11).

9. Clamping device according to claim 8 **characterized in that** the cut-away section (35) of the opposing piece (11) has a bell-shaped inner contour which re-directs the airstream and also effects cleaning of the shaped element.

10. Clamping device according to claim 8 or 9
**characterized in that** a volume-stream measuring device is arranged for checking the position of the pressure-duct (40) which can be activated particularly before reaching the clamping position and/or in the clamping position.

## Revendications

1. Dispositif de serrage pour la fixation de deux pièces l'une à l'autre, en particulier pour la fixation d'une palette de pièces à usiner sur une table porte-pièce, comportant un appui (10) pouvant être fixé à la première pièce, appui qui possède un élément façonné en saillie (15), une contre-pièce (11) pouvant être fixée à la deuxième pièce, contre-pièce qui présente un creux (35) pour le logement de l'élément façonné (15), et comportant un élément à coulisse (19) déplacable dans l'élément façonné en saillie (15), élément à coulisse qui possède au moins un creux (33) circonférentiel dans lequel s'engrène à l'état non serré au moins un élément de serrage (27), déplaçable dans un alésage débouchant (26) de l'élément façonné (15), sachant que, par le déplacement de l'élément à coulisse (19), l'élément de serrage (27) est poussé vers l'extérieur dans la position de serrage dans laquelle il engrène la contre-pièce (11) dans son creux (35), **caractérisé en ce que** l'élément de serrage (27) possède une zone de guidage centrale (30) pour le guidage linéaire dans l'alésage débouchant (26), zone qui est munie d'une rainure annulaire (31) pour le logement d'un anneau d'étanchéité (32), et **en ce que** des zones finales hémisphériques (28, 29) sont formées des deux côtés de la zone de guidage (30).

2. Dispositif de serrage selon la revendication 1, **caractérisé en ce que** l'une des zones finales (29) possède un aplatissement qui, à l'état non serré, coïncide de préférence pour l'essentiel avec la surface externe de l'élément façonné (15).

3. Dispositif de serrage selon la revendication 1 ou 2, **caractérisé en ce qu'**au moins trois éléments de serrage (27) sont répartis sur la circonférence.

4. Dispositif de serrage selon l'une quelconque des revendications précédentes, **caractérisé en ce que** l'élément à coulisse (19) est relié solidement ou d'un seul tenant à un piston (20) pouvant être alimenté en pression des deux côtés, piston qui peut être déplacé dans un alésage (18) dans le support (10).

5. Dispositif de serrage selon la revendication 4, **caractérisé en ce que** l'élément à coulisse (19) dépasse à l'état initial sorti, non serré, de l'élément façonné (15) et **en ce que** la face frontale (39) de la zone en saillie est réalisée en tant que surface d'appui pour une contre-surface dans le creux (35) de la contre-pièce (11).

6. Dispositif de serrage selon la revendication 5, **caractérisé en ce que** le creux circonférentiel (33) minimal de l'élément à coulisse (19) possède une surface de manoeuvre oblique (34) pour pousser l'élément de serrage minimal (27) dans la position de serrage pendant le mouvement d'abaissement de l'élément à coulisse (19) chargé de la contre-pièce (11).

7. Dispositif de serrage selon l'une quelconque des revendications précédentes, **caractérisé en ce que** l'élément de façonnage tronconique (15), formant un dispositif de précentrage conjointement au creux en forme de cloche (35) dans la contre-pièce (11), possède de préférence, sur sa zone basse ou dans la zone adjacente de l'appui (10), une surface d'appui (38) annulaire, de centrage, pour une contre-surface correspondante (37) de la contre-pièce (11).

8. Dispositif de serrage selon l'une quelconque des revendications précédentes, **caractérisé en ce que** l'élément de façonnage (15) et/ou l'élément à coulisse (19) contient au moins une conduite sous pression pour liquide (40) dont l'orifice de sortie minimal est orienté face au creux (35) de la contre-pièce (11).

9. Dispositif de serrage selon la revendication 8, **caractérisé en ce que** le creux (35) de la contre-pièce (11) possède un contour interne en forme de cloche, déviant le courant d'air et entraînant également un nettoyage de l'élément façonné.

10. Dispositif de serrage selon la revendication 8 ou 9, **caractérisé en ce qu'**un dispositif de mesure du débit volumique pour la vérification de la position est attribué à la conduite sous pression (40), dispositif qui peut en particulier être activé avant que la position de serrage ne soit atteinte et/ou dans la position de serrage.
